# EUROPEAN PATENT APPLICATION

(11) **EP 1 594 049 A1**
(43) Date of publication of application: **09.11.2005**
(21) Application number: 04300265.8
(22) Date of filing: 07.05.2004
(51) Int. Cl.: G06F 9/44

(54) **Web application framework**

(71) Applicant: Hewlett-Packard Development Company, L.P., Houston, TX 77070 (US)
(72) Inventor: Manfredi, Raphael, 38053 Grenoble (FR); Fouche, Pierre, 38053 Grenoble (FR)
(74) Representative: Lloyd, Richard Graham

(57) **Abstract**

A web application framework is described for implementing a web server of a type capable of assuming a plurality of states and being arranged to process a received event from among a predeterminable set of events to change from one state to another, with each state having associated with it one or more model objects for providing the server with business logic and/or access to persistent data, the application framework comprising a context object class for creating objects containing data relating to each state, the context object class providing for an entry method for execution upon entry of the state, and an exit method for execution upon exit of the state.

## Description

### BACKGROUND OF THE INVENTION

The present invention relates to web servers and, more particularly, to web application frameworks from which web servers may be built.

The Internet has now become the primary global digital information distribution service. The World Wide Web (Web) allows users to navigate Internet resources in an exploratory way, without using internet protocol (IP) addresses or other special technical knowledge. The Web is made up of interconnected web pages, or web documents stored on web servers. These pages are accessed with the use of a web browser. Web browsers use URL addresses to access resources on the Internet.

The Web uses a transfer protocol known as Hypertext Transfer Protocol (HTTP). HTML and other types of web pages are made up of content text as well as formatting codes that indicate how the page should be displayed. A web browser interprets these codes in order to display the page.

The HTML, or other, code that makes up each web page may be dynamically generated by an event-driven program that is running on the server hardware. This type of program is known as a web application. In the following, the terms "web server" will be used to refer to the logical entity that provides a web page in response to an http request and "web application" to the set of components that provide this function using general-purpose computing platforms within general-purpose operating environments such as are provided by the Microsoft Windows, Linux or HP-UX operating systems and their related programming libraries and tools.

Web applications are generally event-driven programs which react to HTTP requests from the client, the http request being direct ed to a web address (a URL). The web application will generate and return a web page to the browser. The difference between this type of arrangement and a simple "static" site is that each action the user takes can have some semantics associated with it. In other words, the resulting web page can differ according to the user, the current time or other factors prevailing in the system.

Thus, when the web application receives an event, it is arranged to evaluate the received event and decide how to respond to the client. This evaluation process may involve interaction with business logic of some kind. The interaction with the business logic can take place independently of the screen design or user interface and often involve s transactions with back-end systems, such as remote databases. In web applications, the server side code that is responsible for the user interface (ie generation of the web pages to be served) is sometimes referred to as the presentation layer. For instance, in order to generate a web page, the presentation layer may need to access business data, such as a list of names and addresses. This can be obtained from the business logic, which can request the list from a database. The retrieved data can then be used by the presentation layer to build an appropriate HTML table for rendering and display by the browser.

Thus a web application can naturally be separated into a presentation layer, a business and a data layer. This separation is often referred to in web application server literature as the 3-tier model. Physically, the 3 tiers can be implemented separately and on different servers, a feature that can lead to greater scalability and an ability to process more client requests simultaneously.

One well-established architecture for user interfaces which facilitates event driven systems such as this is known as the Model-View-Controller or MVC architecture. The role of the controller in the MVC architecture is to determine the control flow of the system. It must process an incoming event from the user interface and determine the next state of the user interface. In addition, the controller generally must use the model component to carry out any actions required. This can change the state of the underlying business system. With this approach, the state of the underlying business system and the state of the user interface are two different, though often related, things. Thus, the presentation layer of a typical web application can be seen to comprise the view and controller elements. The model element, on the other hand, is separate from the presentation layer views and controllers. It is there to provide problem domain services to the presentation layer including access to persistent storage and thus represents the business logic and data layers.

Due to their increasing size and complexity, web applications, and the service packages they are being used to provide, are to an ever-greater extent being developed as general purpose items that are configurable for deployment in a particular application. Consequently, it has become common t o provide a program developer with a set of pre-defined, interconnected classes which create a set of objects and additional miscellaneous routines that are all directed to performing commonly-encountered tasks in a particular environment. Such pre-defined classes and libraries are typically called "frameworks" and essentially provide a pre-fabricated structure for a working application.

Since frameworks are generally based on object-oriented programming techniques, the pre-defined classes can be used as base classes and the built-in default behavior can be inherited by developer-defined subclasses and either modified or overridden to allow developers to extend the framework and create customized solutions.

The Struts project that is run by the Apache foundation is an example of an application framework for web applications. The design of such frameworks so that they are useful and deployable in as wide a range of situations as possible with as little extension as possible is a major design challenge.

### SUMMARY OF THE INVENTION

In brief, this invention provides a web application framework for implementing a web server of a type capable of assuming a plurality of states and being arranged to process a received event from among a predeterminable set of events to change from one state to another, the application framework comprising a state machine controller class and a context object class for creating objects containing data relating to each state, the context object class providing for an entry method for execution upon entry of the state, and an exit method for execution upon exit of the state wherein the state machine controller class is arranged to process a state transition by calling, in a defined sequence, the exit methods of states left by virtue of the transition and the enter methods of states entered by virtue of the transition.

In preferred embodiments wherein actions may be associated with state transitions and the state machine controller class is arranged to process a transition by carrying out the action before calling any of the enter and/or exit methods.

It is known to use a state machine for controlling a web application. For instance, an article made available at http://www.uidesign.net/1999/papers/webmvc_part1.html describes how a deterministic presentation layer can be achieved by modeling the User Interface using statecharts and then implementing the statechart design as part of a Model-View-Controller (MVC) engine that includes a State machine.

A further example of the use of a state machine for controlling a web application can be found in US2002/0080200 which describes a web application in which a state machine is provided to manage execution and display of a web site. The state machine includes display states and action states. In addition, the Perl module CGI::MxScreen uses a state machine to express its processing logic.

However, the provision of a context object having defined entry and exit methods provides a number of advantages. The state context object attached to a particular state is instantiated once, the first time the state is entered, and then remains in existence throughout the session: this allows the data pertaining to the state itself to be conveniently stored there.

The provision of enter and exit methods that are called in a defined sequence by the state machine controller enables the superstate boundaries to be used to define functional zones of various kinds within the applications.

A further feature of preferred embodiments is that an event context is provided for as a parameter to the enter, exit and/or initialise methods so that the behaviour can be varied according to which transition results in entering or exiting of the state as the case may be.

The invention finds particular, but not exclusive, application for implementing a web server in which the presentation layer is implemented by separate view and controller elements following the classical model-view controller (MVC) model and where the controller element comprises a state machine that formally describes the set of states for the application, and becomes the main support for controlling the operations that can happen. In this case, the dynamic generation of a web page by the view element is triggered on entry to at least some of the states. Model objects, such as pagebeans, can be associated with the states for providing information to the web page.

The above described facilities can be used, for instance, to allow, through a state context object class, strict control to be maintained of the life cycle of the model objects. This is important to ensure that no memory is kept on the application server to keep model objects that are no longer required. As a beneficial side effect, such precise control can prevents accidental reuse of stale data, by ensuring the application can be arranged so that a new model object will be created when the state where this model object is needed is entered.

The fact that the enter method and exit methods are provided permit s the programmer to arrange the context object so that the model objects are created on entering the context, and selectively deleted or not deleted by the exit method. This would permit data pertaining to the state to be controlledly deleted or stored in the model object throughout a session.

Thus, using the enter and exit methods provided by the state context class, the desired lifecycle for the model objects can be more precisely tuned.

In another application, the exit method of at least one context object class is configured to carry out a transaction rollback. In the case of a transaction carried out by a web application, this provides a convenient way of ensuring that, under any circumstances, a transaction is properly rolled back unless an explicit commit action is carried out.

A second aspect of the invention provides a method for developing a web application comprising providing an application framework of the above type.

### BRIEF DESCRIPTION OF THE DRAWINGS

An embodiment of the invention will now be described by way of example only, with reference to the following figures, wherein:
Fig 1 is a schematic diagram showing a web application in the prior art;
Fig 2 is a schematic diagram showing a web application in an embodiment of the invention;
Fig 3 is a flow chart showing a process carried out upon a state transition;
Fig 4 is a state diagram showing the screen flow of a simple web application in a first example;
Fig 5 is a state diagram showing the screen flow of a simple web application in a second example.

### DETAILED DESCRIPTION OF THE PREFERRED EMBODIMENT

In the embodiments to be described below, the JavaServer Pages (JSP) technology is employed as a means to dynamically generate web pages, although it will be appreciated that any other suitable dynamic Web scripting/programming arrangement may equally be used. The JSP technology uses XML-like tags to encapsulate the logic that generates the content for a web page. The application logic can reside in server-based resources (such as JavaBeans) that the page accesses via these tags.

As will be understood by those skilled in the art, object-oriented programming techniques involve the definition, creation, use and destruction of objects. These objects are software entities comprising data elements and routines, or methods, which manipulate the data elements. The data and related methods are treated by the software as an entity and can be created, used and deleted as if they were a single item. Together, the data and methods enable objects to model entities in terms of their characteristics, which can be represented by the data elements, and its behavior, which can be represented by its methods. In this way, objects can model things like web pages, events, people or computers.

Objects are defined by creating "classes" which are not objects themselves, but which act as templates that instruct the compiler how to construct instances of the actual object. A class may, for example, specify the number and type of data variables and the steps involved in the methods which manipulate the data. An object is instantiated in the program by means of a special method called a constructor which uses the corresponding class definition and additional information, such as arguments provided during object instantiation, to construct the object. The Java runtime environment deletes objects when it determines that they are no longer being used. This process is called garbage collection. Objects may be used by using their data and invoking their methods.

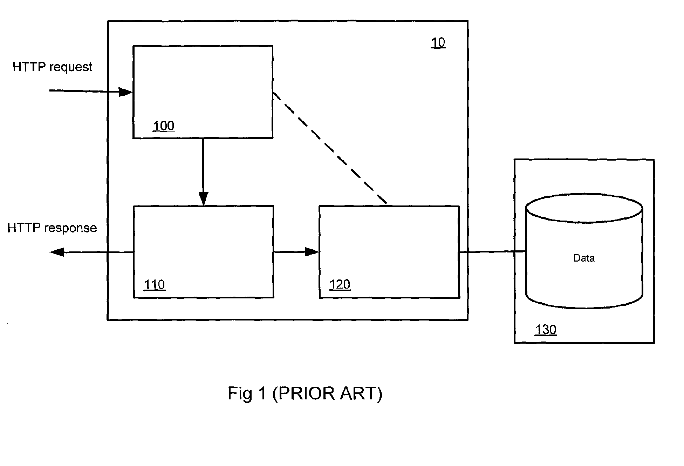

Figure 1 shows a known type of architecture for a web application that forms part of a web server illustrated generally at 10. The architecture shown in Figure 1 comprises a servlet 100, one or more JSP pages 110 and one or more Javabeans 120 that may be used for accessing external data resources illustrated at 130. This general configuration is known as the JSP model 2 architecture and is an example of an MVC (model-view-controller) architecture.

As is well known, servlets are server-side software modules that fit into a web server framework and can be used to extend its capabilities. A JavaBean is simply a building block component that can be combined with other components in the same or other computers in a distributed network to form an application. Such components can be deployed on different servers in a network and communicate with each other for needed services.

Servlet 100 acts as the controller and is in charge of processing an incoming HTTP request by deciding, depending on the user's actions, which of JSP pages 110 to forward the request to, as well as instantiating any beans or objects 120 used by these JSP pages. In such architectures, there is not normally any processing logic within the JSP pages themselves; they are simply static templates that are arranged to be populated by retrieving any objects or beans that may have been previously created by servlet 100, and extracting the dynamic content from them. The general operation of such a system will be generally well understood by those skilled in the art.

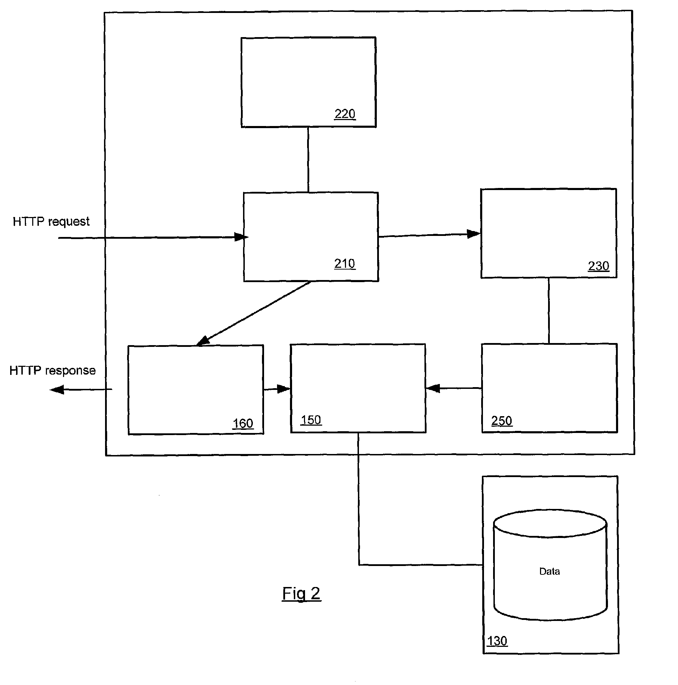

Fig 2 illustrates a web application architecture of the same general type as that illustrated in Fig 1 but in which the controller component is provided with a state machine. The operation of such a web application is as follows. First an incoming http request is received by a SmvController servlet 210 which manages application flow and logic in a manner to be described in more detail below. Event-Type mapper 220 translates the HTTP messages sent to the application server into event objects that are meaningful for the application. Then, the events are passed to a State Machine Controller 230 which consumes the event according to a state machine definition 250. A session manager and session controller (not shown) are also present to manage user authorization in generally known manner (although such components would also normally be present in the system illustrated in Fig 1).

State machine definition 250 defines the flow and logic of the web application. States represent views and transitions between states represent actions. Web application developers define the states and transitions which handle request parameters, use business objects to handle business logic, and populate page beans given to the bean manager 150 to display information on pages.

The state machine used in this embodiment can contain nested states. In the State Machine Definition 250 each state that does not itself have sub-states represents a screen that the user will see, with transitions among the various states representing the navigation flow between the screens. Superstates are used to encapsulate and provide transitions that are common to all of their substates and to provide boundary functions for various functional zones as described below.

When the State Machine Controller 230 receives an event, it computes the next application state based on the combination of several factors: the current state, the event received, the environment context and the set of configured transitions from the current state. Actions can be attached to the state transition that will take place, to carry out the desired business logic.

After event handling and a new application state has been determined, display of the page associated with that new state is triggered. The SmvController servlet 210 forwards control to JSP view generator 160 to generate an HTML web page that will be sent the client browser. JSP view generator 160 typically makes use of Javaserver pages Standard Tag Library (JSTL) to help produce the HTML. These tag libraries in turn use information stored in the page beans.

Once the page is generated, provided to the browser and displayed, it presents options to the user for another interaction, and the cycle repeats itself.

Thus, a hierarchical state machine formally describes the set of states that the application can be in, and becomes the main support for controlling the operations that can happen.

Each atomic state, ie each state that does not have substates, represents a view that the application will show (a web page). Each state of the state machine is associated with a context object, and is equipped with callbacks, triggered by the state machine controller when a state is entered or left.

The state context object attached to a particular state is created once, the first time the state is entered, and then remains in existence throughout the session: this allows the data pertaining to the state to be stored there.

The application framework of the present embodiment thus provides an object context class *BaseStateContext* that has the methods shown in Table I.

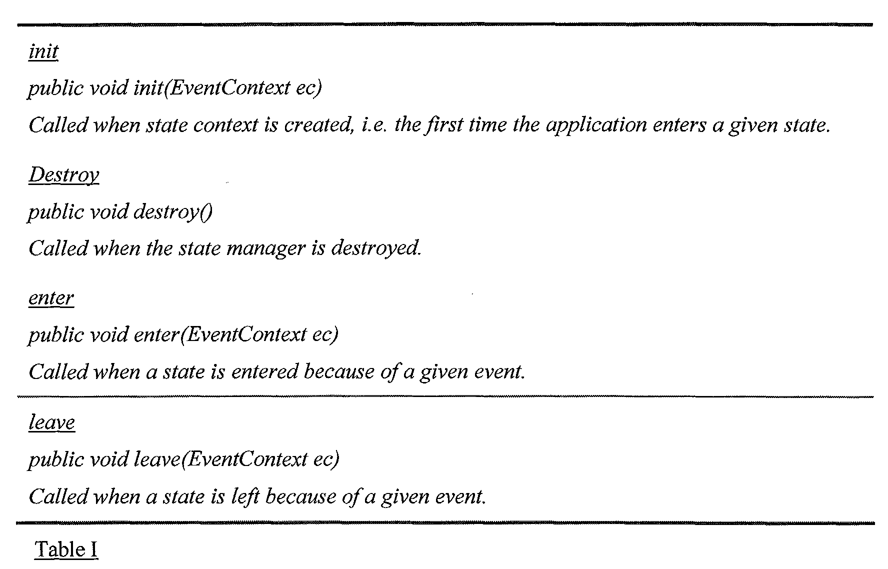

When a transition is made from one state to another state, several nested states may be left and then several nested states entered. As each state boundary is crossed, the corresponding callbacks "Leave" and "Enter" shown in Table I and that are provided by the *BaseStateContext* class are called by the state machine controller on the associated state objects in the order described, which is defined by the actual state boundaries that are crossed during the transition.

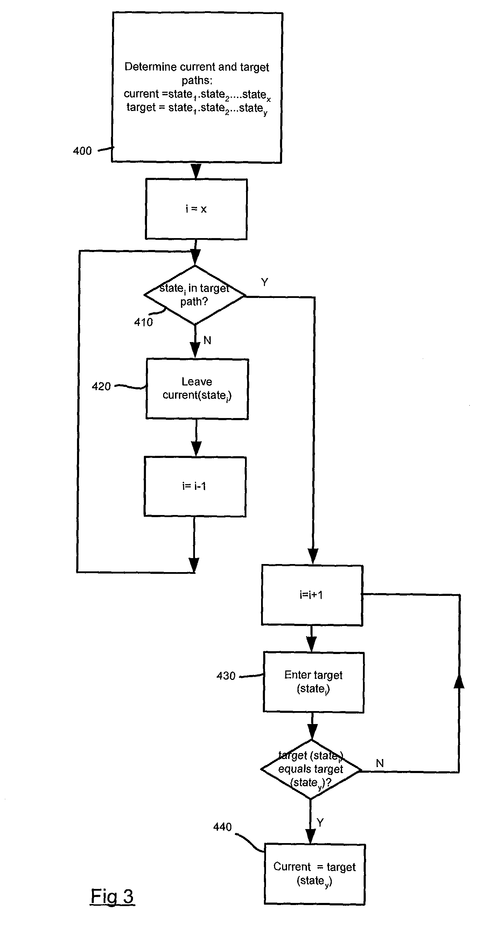

An example of an algorithm that may be used by the state machine controller is shown in Fig 3. Consider a transition from statex to statey. First the full path of statex and statey are calculated. This results in lists of all states from the root state to statex and statey respectively. It is then determined in step 410 whether the current state lies in the path of the target state in step 410, if not then the leave method is carried out on the current state in step 420. This process is repeated until a state is reached that does lie in the path of the target state. The enter methods of states in the target path are then repeatedly called until the target statey is reached. The target state statey is then set as the current state.

In the following, two examples will be given to illustrate the usefulness of the state context object and associated enter and exit methods.

One feature of known web application frameworks, such as Struts, is that they do not provide any facility to explicitly address the lifecycle management of model objects. They expect the programmers to handle that along with their natural workflow, but without providing a clear structuring approach. However, in practice, programmers often cannot in any given design easily determine whether an object is still needed or not at a particular point in the program. They will thus often err on the side of caution and prefer to design the program so as to leave the object in existence when this is not necessary or to be deleted later by the operating system when the process terminates. This can result in performance inefficiencies.

Thus, as a first example of the use the callbacks provided by the state context object class, it will be described how the life cycle of a model object, such as a javabean, can be managed by the state machine by associating it with a state, and making sure the object is created by the "Enter" callbacks and destroyed, if desired, by the "Leave" callbacks.

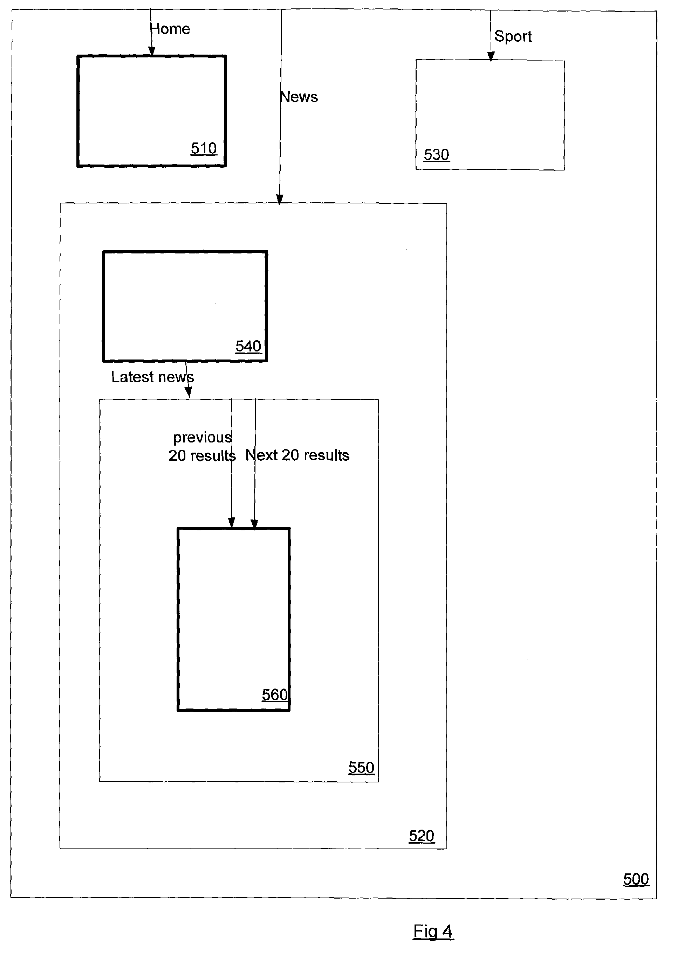

To illustrate the operation of the state machine controller, Fig 4 is a hierarchical state diagram showing a set of different application screens and how a user can go from one to another by doing which action. The diagram comprises an overall super state 500, a home state 510, a "news" superstate 520, and a sport state 530. News superstate 520 comprises a news page 540, a database search superstate 550 and a states 560 corresponding to a view of database search results.

Within each superstate, one substate illustrated in bold is selected as the default substate that is entered by default on entry to the superstate. This default substrate can be either configured to always be the same state, or can be dynamically computed on entry to the superstate. For example, on entry to the site, the home state 510 is selected as the default state within super state 50. Thus on first entry to the site, it is the web page associated with home state 510 that is generated and displayed.

Similarly, on entry to news superstate 520, it is the page 540 that is generated and displayed and on entry to state 550 it is view page 560 that is generated and displayed.

It will be understood that transitions that are illustrated as being available from a superstate are available from each of the substates within the superstate. So, for instance the "Home" event is available from each of the four atomic substates 510, 630, 540, 560.

In the above described example, it is supposed that database search superstate 550 has a javabean, that we will refer to as *latest_news_bean,* associated with it that carries out a search in a data repository, such as repository 130, containing a database of news items. The state 560 has a javabean that we will refer to as *latest_news_view_bean*, associated with it that retrieves the first 20 elements in the search results and creates a table displaying them. The next 20 elements can be displayed via transition "next 20 results". The detailed implementation of javabeans of this type will be well understood by those skilled in the art and need not be described here.

A variable n is stored in the context of state 550. On first entry into state 520, the variable n is set to 0. State 530 has a javabean associated with it that retrieves the elements n to n+20 and displays them. Actions are associated with the transitions "next 20 results" and "previous 20 results to increment and decrement n by 20 respectively.

When a transition is made from one state to another state, several nested states may be left and then several nested states entered. As each state boundary is crossed, the corresponding callbacks "Leave" and "Enter" shown that are provided by the *StateContext* class for each state are called in the order described above, which is defined by the state boundaries that are crossed during the transition.

For example, referring to Fig 4, a transition from page home page 560 to the Home page 510 would involve the following processes (in order):
(i) leave state 560;
(ii) leave state 550;
(iii) leave state 520;
(iv) enter state 510.

Thus in this example, the exit method associated with the state 560 can be used to ensure that the javabean *latest_news_view_bean* associated with state 560 is deleted on leaving state 560 and the exit method associated with the state 520 to ensure javabean *latest_news_view* is deleted when the state 520 is left, if it is considered that the search results stored therein will no longer be required or to ensure that a new database search is carried out each time state 520 is entered so as to avoid the data becoming stale.

The arrangement thus provides a framework in which a hierarchical state machine model is combined with the association of model objects to each state, relying on the flow of well-defined callbacks (triggered by the state machine controlling engine) that can be used to precisely determine the lifecycle of the model objects.

The lifecycle management of the objects is thus grouped in a single class - based on the *BaseStateContext* class - which will be instantiated to form the state's context object. The mechanics of the state machine controller then does the work automatically.

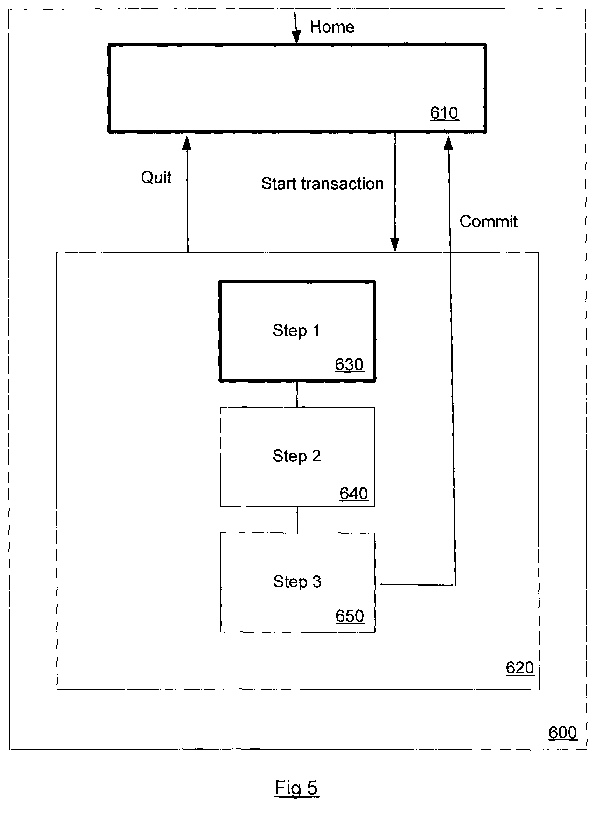

A second example of the use of the enter and exit callbacks is illustrated with reference to Figure 5. In the state machine illustrated in Fig 5, a superstate 600 includes a home state 610 and a transaction superstate 620. Transaction superstate 620 includes states 630, 640 and 650 representing 3 steps of a transaction. There are a number of ways in which a transition out of states 630, 640 or 650 may occur. A specific quit transition is available from each of the states, but a home transition is also available, since substates 630, 640 and 650 are all substates of super state 600 to which the home transition is attached. The leave callback associated with transaction superstate 620 is therefore a convenient way of ensuring that a transaction rollback action is carried out whenever and however the superstate 620 is left. The commit transition which is available from state 650 step 3 of the transaction also causes state 620 to be left and therefore the rollback to be carried out, however if the commit action is associated with the commit transition then this action will be carried out before the leave callback is called. In either case, the javabean associated with state 620 may be deleted.

It will be appreciated that commercialised forms of the present embodiment would in practice take the form of a set of computer programs adapted to run on general-purpose computing platforms within general-purpose operating environments such as are provided by the Microsoft Windows, Linux or HP-UX operating systems and their related programming libraries and tools. These programs may be marketed in the form of suitably coded computer program products including program code elements that implement the functionality described. It will be appreciated though that the techniques described may equally be implemented as special purpose hardware or any combination of software, hardware and/or firmware.

The above discussion is meant to be illustrative of the principles and various embodiments of the present invention. Numerous variations and modifications in each of the illustrated examples will become apparent to those skilled in the art once the above disclosure is fully appreciated. It is intended that the following claims be interpreted to embrace all such variations and modifications.

## Claims

1. A web application framework for implementing a web server of a type capable of assuming a plurality of states and being arranged to process a received event from among a predeterminable set of events to change from one state to another, the application framework comprising a state machine controller class and a context object class for creating objects containing data relating to each state, the context object class providing for an entry method for execution upon entry of the state, and an exit method for execution upon exit of the state wherein the state machine controller class is arranged to process a state transition by calling, in a defined sequence, the exit methods of states left by virtue of the transition and the enter methods of states entered by virtue of the transition.

2. A web application framework as claimed in claim 1 wherein an initialise method is provided in the context object class for execution upon first entry of the state within a given session.

3. A web application framework as claimed in any preceding claim wherein an event context is provided for as a parameter to the enter, exit and/or initialise methods so that the behaviour can be varied according to which transition results in entering or exiting of the state as the case may be.

4. A web application framework as claimed in any preceding claim wherein actions may be associated with state transitions and the state machine controller class is arranged to process a transition by carrying out the action before calling any of the enter and/or exit methods.

5. A web application framework as claimed in claim 1 wherein the entry method is configurable to instantiate a model object and the exit method of that state is configurable to delete the instantiation of the model object.

6. A web server comprising a web application of a type capable of assuming a plurality of states and being arranged to process a received event from among a predeterminable set of events to change from one state to another, the web application comprising a state machine controller and a context object class for creating objects containing data relating to each state, the context object class providing for an entry method for execution upon entry of the state, and an exit method for execution upon exit of the state, wherein the state machine controller is arranged to process a state transition by calling, in a defined sequence, the exit methods of states left by virtue of the transition and the enter methods of states entered by virtue of the transition.

7. A web server as claimed in claim 6 wherein an initialise method is provided in the context object class for execution upon first entry of the state within a given session.

8. A web server as claimed in claim 6 or claim 7 wherein an event context is provided as a parameter to the enter, exit and/or initialise methods so that the behaviour of the methods can be varied according to which transition results in entering or exiting of the state as the case may be.

9. A web server as claimed in any of claims 6 to 8 wherein actions may be associated with state transitions and the state machine controller is arranged to process a transition by carrying out the action before calling any of the enter and/or exit methods.

10. A web server as claimed in any of claims 6 to 9 wherein the entry method of at least one context object class is configured to instantiate a model object and the exit method of that context object class configured to delete the instantiation of the model object.

11. A web server as claimed in any of claim 6 to 10 wherein the exit method of at least one context object class is configured to carry out a transaction rollback.

12. A method for developing a web application comprising:
obtaining an application framework as claimed in any preceding claim;
creating a state machine to describe the plurality of states and a set of transitions between said states;
defining a state context object for each state based on the context object class;
defining model objects for use by at least some of the states and
configuring the enter and exit methods for each state context object to provide lifecycle management for model objects created by the state context objects.

13. A method as claimed in claim 12 comprising configuring the exit method of at least some of the state context objects to delete a model object on leaving the state and configuring the exit method of at least others of the state context objects not to delete a model object on leaving the state.
